# EUROPEAN PATENT SPECIFICATION

(11) **EP 4 318 708 B1**
(45) Date of publication and mention of the grant of the patent: **09.07.2025**
(21) Application number: 23188291.1
(22) Date of filing: 28.07.2023
(51) Int. Cl.: H01M 10/0565, H01M 10/0525

(54) **SEMI-INTERPENETRATING POLYMER NETWORK (SIPN) ELECTROLYTE AND PREPARATION METHOD AND USE THEREOF**
ELEKTROLYT MIT SEMI-INTERPENETRIERENDEM POLYMERNETZWERK (SIPN) UND HERSTELLUNGSVERFAHREN UND VERWENDUNG DAVON
ÉLECTROLYTE À RÉSEAU POLYMÈRE SEMI-INTERPÉNÉTRÉ (SIPN) ET SON PROCÉDÉ DE PRÉPARATION ET SON UTILISATION

(30) Priority: 01.08.2022 CN 202210913575
(43) Date of publication of application: 07.02.2024
(73) Proprietor: Jilin Dongchi New Energy Technology Co., Ltd., 130000 Changchun Jilin (CN)
(72) Inventor: XIE, Haiming, Changchun, 130000 (CN); GUO, Nan, Changchun, 130000 (CN); LIU, Jun, Changchun, 130000 (CN)
(74) Representative: Croce, Valeria

(56) References cited:
- CHENG C.L. ET AL: "Microporous PVdF-HFP based gel polymer electrolytes reinforced by PEGDMA network", ELECTROCHEMISTRY COMMUNICATIONS, vol. 6, no. 6, 1 June 2004 (2004-06-01), NL, pages 531 - 535, XP093121641, ISSN: 1388-2481, DOI: 10.1016/j.elecom.2004.04.001
- FAN HAOYU ET AL: "UV-curable PVdF-HFP-based gel electrolytes with semi-interpenetrating polymer network for dendrite-free Lithium metal batteries", JOURNAL OF ELECTROANALYTICAL CHEMISTRY, ELSEVIER, AMSTERDAM, NL, vol. 871, 31 May 2020 (2020-05-31), XP086226025, ISSN: 1572-6657, [retrieved on 20200531], DOI: 10.1016/J.JELECHEM.2020.114308
- REN Z ET AL: "Polymer electrolytes based on poly(vinylidene fluoride-co-hexafluoropropylene) with crosslinked poly(ethylene glycol) for lithium batteries", SOLID STATE IONICS, NORTH HOLLAND PUB. COMPANY. AMSTERDAM; NL, NL, vol. 180, no. 9-10, 29 May 2009 (2009-05-29), pages 693 - 697, XP026097610, ISSN: 0167-2738, [retrieved on 20090408], DOI: 10.1016/J.SSI.2009.02.033
- PROF PREMAMOY GHOSH: "POLYMER SCIENCE FUNDAMENTALS OF POLYMER SCIENCE Molecular Weights of Polymers CONTENTS Introduction Concept of Average Molecular Weight Number Average Molecular Weight Membrane Osmometry Weight Average Molecular Weight Assessment of Shape of Polymer Molecules Viscosity Average Molecular Weight Gener", 21 September 2006 (2006-09-21), XP055608363, Retrieved from the Internet <URL:http://nsdl.niscair.res.in/jspui/bitstream/123456789/406/2/Molecular%20weights%20of%20polymers.pdf> [retrieved on 20190724]

## Description

### TECHNICAL FIELD

The present disclosure relates to the technical field of solid polymer electrolytes, in particular to a semi-interpenetrating polymer network (SIPN) electrolyte and a preparation method and use thereof.

### BACKGROUND

Lithium-ion batteries are widely used due to their high energy density and working voltage, long cycle life, low self-discharge rate, no memory effect, fast charging and discharging, and environmental friendliness. However, traditional liquid lithium secondary batteries contain a large amount of organic electrolytes, and are easily volatile, flammable, and explosive, thus posing a major safety hazard. Compared with organic electrolytes, polymer electrolytes can avoid the leakage of traditional lithium batteries and improve the safety performance of batteries. Moreover, the polymer electrolytes show better compatibility with electrodes and inhibit the growth of lithium dendrites. Furthermore, desirable mechanical processing properties of the polymer electrolytes make thin-film, miniaturized, flexible, and bendable lithium batteries possible. At present, a commonly used electrolyte for polymer electrolyte batteries is polyethylene oxide. However, polyethylene oxide electrolytes have high interfacial impedance and low ionic conductivity at room temperature.

To address these issues, researchers have proposed a variety of modification schemes, such as preparation of random copolymers, block copolymers, network polymers, or comb polymers. These polymers can enhance a lithium-conducting function to a certain extent, but still need to improve their rate and cycle performances.

Cheng, C.L. et al in article "Microporous PVdF-HFP based gel polymer electrolytes reinforced by PEGDMA network" (Electrochemistry Communications, vol. 6, no. 6, 1 June 2004, pages 531-535) disclose a process to prepare microporous poly(vinylidene fluoride-co-hexafluoropropylene) (PVdF-HFP) copolymer based gel electrolyte with polyethylene glycol dimethacrylate (PEGDMA) network without the need for extraction process, where the microporous structure in polymer matrix is achieved by solvent controlled evaporation from solution containing a copolymer in a mixture of volatile solvent and nonsolvent.

Haoyu Fan et al in article "UV-curable PVdF-HFP-based gel electrolytes with semi-interpenetrating polymer network for dendrite-free Lithium metal batteries" (Journal of Electroanalytical Chemistry, vol. 871, 31 May 2020, Elsevier) disclose a PVdF-HFP based gel polymer electrolytes synthesized by UV-curing method, where the PEGMA and PEGDA are employed to enhance the mechanical properties of the electrolyte by forming 3D semi-interpenetrating polymer network.

Zhong Ren et al in article "Polymer electrolytes based on poly (vinylidene fluoride-co-hexafluoropropylene) with crosslinked poly (ethylene glycol) for lithium batteries" (Solid State Ionics, vol. 180, no, 9-10, 29 May 2009, pages 693-697, Elsevier) disclose a method for preparing semi-interpenetrating polymer networks of PVDF-HFP based electrolytes with crosslinked diepoxy polyethylene glycol (DIEPEG). In the method, impurities are avoided because of a moderate reaction temperature at 50°C and poly(ethylenimine)(PEI) as the crosslinking agent.

### SUMMARY

An objective of the present disclosure is to provide an SIPN electrolyte and a preparation method and use thereof. The SIPN electrolyte has an excellent rate performance and a stable cycle performance.

To achieve the above objective of the present disclosure, the present disclosure provides the following technical solutions.

The present disclosure provides a semi-interpenetrating polymer network (SIPN) electrolyte, including the following raw materials: poly(vinylidene fluoride-co-hexafluoropropylene), a diallyl compound, a crosslinking agent, a plasticizer, a photoinitiator , and a lithium salt; where
the poly(vinylidene fluoride-co-hexafluoropropylene), the diallyl compound, the crosslinking agent, the plasticizer, and the photoinitiator are at a mass ratio of (10-40):(30-70):(1-5):(1-20):(2-10);
the lithium salt and the SIPN electrolyte are at a mass ratio of 1:(2-10); the diallyl compound has a structure shown in Formula 1: 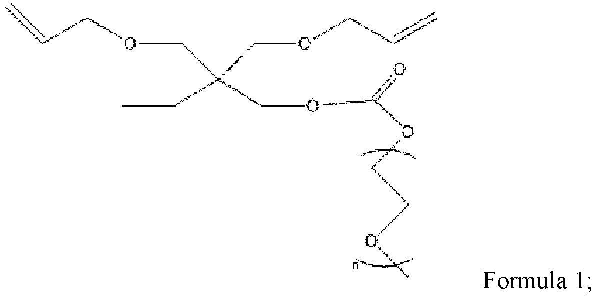 where
   n is a positive integer;
   a preparation method of the diallyl compound includes the following steps:
      mixing N,N'-carbonyldiimidazole, N,N'-diisopropylethylamine, and polyethylene glycol monomethyl ether with a first organic solvent to allow first elimination to obtain a terminal methylimidazole-based polyethylene oxide; and
      mixing the terminal methylimidazole-based polyethylene oxide and 2,2-bis(allyloxymethyl)-1-butanol (containing mono- and tri-substituted products) with a second organic solvent to allow second elimination to obtain the diallyl compound;
      where the crosslinking agent is one or more selected from the group consisting of pentaerythritol tetrakis(3-mercaptopropionate), dipentaerythritol hexakis(3-mercaptopropionate), trimethylolpropane tris(3-mercaptopropionate), and pentaerythritol tetrakis(2-mercaptoacetate); and
      a preparation method of the SIPN electrolyte including the following steps:
         mixing the poly(vinylidene fluoride-co-hexafluoropropylene), the lithium salt, the diallyl compound, the crosslinking agent, the plasticizer, and the photoinitiator with an organic solvent to obtain a precursor solution; and
         forming a film from the precursor solution, and subjecting the film to ultraviolet irradiation to obtain the SIPN electrolyte.

Preferably, the N,N'-carbonyldiimidazole, the N,N'-diisopropylethylamine, and the polyethylene glycol monomethyl ether are at a mass ratio of (1-15):(1-15):20; and
the terminal methylimidazole-based polyethylene oxide and the 2,2-bis(allyloxymethyl)-1-butanol (containing mono- and tri-substituted products) are at a mass ratio of 10:(1-10).

Preferably, the first organic solvent and the second organic solvent are independently selected from the group consisting of dichloromethane, chloroform, methanol, ethanol, acetone, acetonitrile, dimethylsulfoxide (DMSO), N,N-dimethylformamide (DMF), and N,N-dimethylacetamide (DMA).

Preferably, the first elimination and the second elimination each are conducted under stirring; and
the first elimination and the second elimination are conducted at a room temperature for independently 6 h to 24 h.

Preferably, the plasticizer is one or more selected from the group consisting of propylene carbonate, ethylene carbonate, dimethyl carbonate, diethyl carbonate, fluorovinyl hydrochloride, and ethyl methyl carbonate.

Preferably, the photoinitiator is one or more selected from the group consisting of benzoylbenzene, phenylbenzophenone, 4-methylbenzophenone, 1-hydroxycyclohexyl phenyl ketone, and 2,2-dimethoxy-2-phenylacetophenone; and
the lithium salt is one or more selected from the group consisting of LiPF₆, LiClO₄, LiTFSI, LiFSI, LiBOB, and LiDFOB.

The present disclosure further provides a preparation method of the SIPN electrolyte, including the following steps:
mixing the poly(vinylidene fluoride-co-hexafluoropropylene), the lithium salt, the diallyl compound, the crosslinking agent, the plasticizer, and the photoinitiator with an organic solvent to obtain a precursor solution; and
forming a film from the precursor solution, and subjecting the film to ultraviolet irradiation to obtain the SIPN electrolyte.

Preferably, the ultraviolet irradiation is conducted at a wavelength of 100 nm to 380 nm and a light intensity of (10-200) mW·cm⁻² for 0.5 h to 1.5 h.

The present disclosure further provides use of the SIPN electrolyte in a polymer lithium battery.

The present disclosure provides a semi-interpenetrating polymer network (SIPN) electrolyte, including the following raw materials: poly(vinylidene fluoride-co-hexafluoropropylene), a diallyl compound, a crosslinking agent, a plasticizer, a photoinitiator , and a lithium salt; where the poly(vinylidene fluoride-co-hexafluoropropylene), the diallyl compound, the crosslinking agent, the plasticizer, and the photoinitiator are at a mass ratio of (10-40):(30-70):(1-5):(1-20):(2-10); and the lithium salt and oxirane groups in the SIPN electrolyte are at a mass ratio of 1:(1-10). In the present disclosure, the SIPN electrolyte can undergo a thiol-ene click reaction under ultraviolet irradiation to form a solid electrolyte containing a semi-interpenetrating network structure. The poly(vinylidene fluoride-co-hexafluoropropylene) not only enhances mechanical properties of the semi-interpenetrating network structure, but also improves an ionic conductivity of a film of the SIPN electrolyte at room temperature. In this way, an obtained polymer lithium battery can obtain an excellent rate performance and a cycle stability. According to the description of examples, the SIPN electrolyte has an ion conductivity of 2.45×10⁻⁴ S·cm⁻¹ at room temperature; a lithium iron phosphate-based lithium battery assembled with the film of the SIPN electrolyte has a specific discharge capacity of up to 160 mA·h·g⁻¹ at a rate of 0.1 C.

The present disclosure further provides a preparation method of the SIPN electrolyte, including the following steps: mixing the poly(vinylidene fluoride-co-hexafluoropropylene), the lithium salt, the diallyl compound, the crosslinking agent, the plasticizer, and the photoinitiator with an organic solvent to obtain a precursor solution; and forming a film from the precursor solution, and subjecting the film to ultraviolet irradiation to obtain the SIPN electrolyte. The preparation method has simple operation, mild conditions, and low cost.

### BRIEF DESCRIPTION OF THE DRAWINGS

FIG. 1 shows a proton nuclear magnetic resonance spectrogram of the diallyl compound of the present disclosure;
FIG. 2 shows a curve that an ion conductivity of the SIPN electrolyte in Example 1 changes with temperature;
FIG. 3 shows a room-temperature cycle test result of a button cell assembled by the SIPN electrolyte prepared in Example 1;
FIG. 4 shows a cycle test result of a Li//Li symmetric button cell assembled by the SIPN electrolyte prepared in Example 1; and
FIG. 5 shows a room-temperature rate cycle test result of a Li//Li symmetric button cell assembled by the SIPN electrolyte prepared in Example 2.

### DETAILED DESCRIPTION OF THE EMBODIMENTS

The present disclosure provides a semi-interpenetrating polymer network (SIPN) electrolyte, including the following raw materials: poly(vinylidene fluoride-co-hexafluoropropylene), a diallyl compound, a crosslinking agent, a plasticizer, a photoinitiator , and a lithium salt; where
the poly(vinylidene fluoride-co-hexafluoropropylene), the diallyl compound, the crosslinking agent, the plasticizer, and the photoinitiator are at a mass ratio of (10-40):(30-70):(1-5):(1-20):(2-10); and
the lithium salt and the SIPN electrolyte are at a mass ratio of 1:(2-10); the diallyl compound has a structure shown in Formula 1: 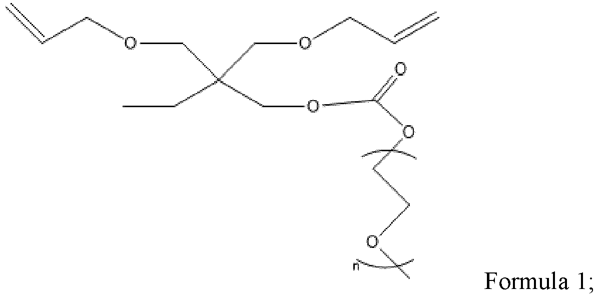 where
   n is a positive integer;
   a preparation method of the diallyl compound comprises the following steps:
      mixing N,N'-carbonyldiimidazole, N,N'-diisopropylethylamine, and polyethylene glycol monomethyl ether with a first organic solvent to allow first elimination to obtain a terminal methylimidazole-based polyethylene oxide; and
      mixing the terminal methylimidazole-based polyethylene oxide and 2,2-bis(allyloxymethyl)-1-butanol (containing mono- and tri-substituted products) with a second organic solvent to allow second elimination to obtain the diallyl compound;
      where the crosslinking agent is one or more selected from the group consisting of pentaerythritol tetrakis(3-mercaptopropionate), dipentaerythritol hexakis(3-mercaptopropionate), trimethylolpropane tris(3-mercaptopropionate), and pentaerythritol tetrakis(2-mercaptoacetate); and
      a preparation method of the SIPN electrolyte comprises the following steps:
         mixing the poly(vinylidene fluoride-co-hexafluoropropylene), the lithium salt, the diallyl compound, the crosslinking agent, the plasticizer, and the photoinitiator with an organic solvent to obtain a precursor solution; and
         forming a film from the precursor solution, and subjecting the film to ultraviolet irradiation to obtain the SIPN electrolyte.

In the present disclosure, unless otherwise specified, all raw materials for preparation are commercially available products well known to those skilled in the art.

In the present disclosure, N,N'-carbonyldiimidazole, N,N'-diisopropylethylamine, and polyethylene glycol monomethyl ether are mixed with a first organic solvent to allow first elimination to obtain a terminal methylimidazole-based polyethylene oxide.

In the present disclosure, the first organic solvent is preferably one or more of dichloromethane, chloroform, methanol, ethanol, acetone, acetonitrile, DMSO, DMF, and DMA. When the first organic solvent includes two or more of the above specific options, there is no special limitation on a proportion of the above specific substances, which can be mixed according to any proportion.

In the present disclosure, the N,N'-carbonyldiimidazole, the N,N'-diisopropylethylamine, and the polyethylene glycol monomethyl ether are at a mass ratio of preferably (1-15):(1-15):20, more preferably (1-10):(1-10):20, and most preferably (1-7):(1-7):20.

In the present disclosure, the N,N'-carbonyldiimidazole and the first organic solvent are at a mass-to-volume ratio of preferably 1 g: (1-30) mL, more preferably 1 g: (1-20) mL, most preferably 1 g: (1-10) mL.

In the present disclosure, the mixing includes preferably: mixing the N,N'-carbonyldiimidazole, the N,N'-diisopropylethylamine, and a part of the first organic solvent, and discharging air to obtain a first solution; mixing the polyethylene glycol monomethyl ether and a remaining part of the first organic solvent to obtain a second solution; adding the second solution to the first solution. There is no special limitation on a ratio of the part of the first organic solvent and the remaining part of the first organic solvent, and a ratio well known to those skilled in the art can be used to ensure that the first solution and the second solution are fully dissolved.

In the present disclosure, the first elimination is preferably conducted under stirring. There is no special limitation on a stirring process, and a process well known to those skilled in the art can be used. The first elimination is conducted at preferably a room temperature for preferably 6 h to 24 h.

In the present disclosure, the terminal methylimidazole-based polyethylene oxide and 2,2-bis(allyloxymethyl)-1-butanol (containing mono- and tri-substituted products) are mixed with a second organic solvent to allow second elimination to obtain the diallyl compound.

In the present disclosure, the second organic solvent is preferably one or more of dichloromethane, chloroform, methanol, ethanol, acetone, acetonitrile, DMSO, DMF, and DMA. When the second organic solvent includes two or more of the above specific options, there is no special limitation on a proportion of the above specific substances, which can be mixed according to any proportion.

In the present disclosure, the terminal methylimidazole-based polyethylene oxide and the 2,2-bis(allyloxymethyl)-1-butanol (containing mono- and tri-substituted products) are at a mass ratio of preferably 10:(1-10), more preferably 10:(1-8), and most preferably 10:(1-5).

In the present invention, the terminal methylimidazole-based polyethylene oxide and the second organic solvent are at a mass-to-volume ratio of preferably 1 g: (1-30) mL, more preferably 1 g: (1-20) mL, and most preferably 1 g: (1-10) mL.

In the present disclosure, there is no special limitation on a mixing process, which can be conducted by adopting a process well known to those skilled in the art.

In the present disclosure, the second elimination is preferably conducted under stirring. There is no special limitation on a stirring process, and a process well known to those skilled in the art can be used. The second elimination is conducted at preferably a room temperature for preferably 6 h to 24 h.

In the present disclosure, the crosslinking agent is one or more selected from the group consisting of pentaerythritol tetrakis(3-mercaptopropionate), dipentaerythritol hexakis(3-mercaptopropionate), trimethylolpropane tris(3-mercaptopropionate), and pentaerythritol tetrakis(2-mercaptoacetate). When the crosslinking agent includes two or more of the above specific options, there is no special limitation on a proportion of the above specific substances, which can be mixed according to any proportion.

In the present disclosure, the plasticizer is one or more selected from the group consisting of propylene carbonate, ethylene carbonate, dimethyl carbonate, diethyl carbonate, fluorovinyl hydrochloride, and ethyl methyl carbonate. When the plasticizer includes two or more of the above specific options, there is no special limitation on a proportion of the above specific substances, which can be mixed according to any proportion.

In the present disclosure, the photoinitiator is one or more selected from the group consisting of benzoylbenzene, phenylbenzophenone, 4-methylbenzophenone, 1-hydroxycyclohexyl phenyl ketone, and 2,2-dimethoxy-2-phenylacetophenone. When the photoinitiator includes two or more of the above specific options, there is no special limitation on a proportion of the above specific substances, which can be mixed according to any proportion.

In the present disclosure, the lithium salt is one or more selected from the group consisting of LiPF₆, LiClO₄, LiTFSI, LiFSI, LiBOB, and LiDFOB. When the lithium salt includes two or more of the above specific options, there is no special limitation on a proportion of the above specific substances, which can be mixed according to any proportion.

In the present disclosure, the poly(vinylidene fluoride-co-hexafluoropropylene), the diallyl compound, the crosslinking agent, the plasticizer, and the photoinitiator are at a mass ratio of preferably (10-40):(30-70):(1-5):(1-20):(2-10), more preferably (15-35):(35-60):( 2-4):(3-15):(4-8), and most preferably (20-30):(40-50):(2.5-3.5):(5-10):(5-6).

In the present disclosure, the lithium salt and the SIPN electrolyte are at a mass ratio of 1:(1-10), more preferably 1:(2-9), and most preferably 1:(3-7).

The present disclosure further provides a preparation method of the SIPN electrolyte, including the following steps:
mixing the poly(vinylidene fluoride-co-hexafluoropropylene), the lithium salt, the diallyl compound, the crosslinking agent, the plasticizer, and the photoinitiator with an organic solvent to obtain a precursor solution; and
forming a film from the precursor solution, and subjecting the film to ultraviolet irradiation to obtain the SIPN electrolyte.

In the present disclosure, the poly(vinylidene fluoride-co-hexafluoropropylene), the lithium salt, the diallyl compound, the crosslinking agent, the plasticizer, and the photoinitiator are mixed with an organic solvent to obtain a precursor solution.

In the present disclosure, the organic solvent is preferably one or more of dichloromethane, chloroform, methanol, ethanol, acetone, acetonitrile, DMSO, DMF, and DMA. When the organic solvent includes two or more of the above specific options, there is no special limitation on a proportion of the above specific substances, which can be mixed according to any proportion.

In the present disclosure, the mixing includes preferably: mixing the poly(vinylidene fluoride-co-hexafluoropropylene) and the organic solvent, adding the lithium salt, the diallyl compound, the crosslinking agent, and the plasticizer in sequence, stirring for 5 h to 12 h until uniformly dispersed, adding the photoinitiator and continuing to stir for 1 h to 5 h.

In the present disclosure, a film is formed from the precursor solution, and the film is subjected to ultraviolet irradiation to obtain the SIPN electrolyte.

In the present disclosure, the precursor solution is preferably subjected to ultrasonic treatment for 2 min to 5 min before the film is formed. There is no special limitation on a frequency of the ultrasonic treatment, and a frequency well known to those skilled in the art can be used.

In the present disclosure, the film is preferably formed by: coating the precursor solution on a surface of a substrate, and then drying.

In the present disclosure, the coating includes preferably scraping the precursor solution onto the surface of the substrate with a doctor blade with a groove of 250 µm. The substrate is preferably a polytetrafluoroethylene substrate.

In the present disclosure, the drying is preferably vacuum drying; and the vacuum drying is conducted at preferably 60°C to 120°C, more preferably 80°C to 100°C for preferably 0.5 h to 18 h, more preferably 1 h to 10 h.

In the present disclosure, the ultraviolet irradiation is conducted at a wavelength of preferably 100 nm to 380 nm, more preferably 150 nm to 300 nm and a light intensity of (10-200) mW·cm⁻², more preferably (80-130) mW·cm⁻² for preferably 0.5 h to 1.5 h, more preferably 0.8 h to 1.2 h.

The present disclosure further provides use of the SIPN electrolyte in a polymer lithium battery. In the present disclosure, there is no special limitation on a use method, and the SIPN electrolyte can be used as an electrolyte between a cathode and an anode in the polymer lithium battery by a method well known to those skilled in the art.

The SIPN electrolyte and the preparation method and the use thereof provided by the present disclosure will be described in detail below in conjunction with examples, but should not be construed as limiting the scope of the disclosure.

### Example 1

0.85 g of N,N'-carbonyldiimidazole and 0.646 g of N,N'-diisopropylethylamine were dissolved in 20 mL of dichloromethane, and air in a device was removed to obtain a first solution; 5 g of polyethylene glycol monomethyl ether with a molar mass of 1,000 g/mol was dissolved in 50 mL of dichloromethane to obtain a second solution; the second solution was added to the first solution, and stirred at room temperature for 24 h to obtain terminal methylimidazole-based polyethylene oxide.

3 g of the terminal methylimidazole-based polyethylene oxide and 0.645 g of 2,2-bis(allyloxymethyl)-1-butanol were dissolved in 30 mL of chloroform, and stirred at room temperature for 24 h to obtain a diallyl compound.

0.3610 g of poly(vinylidene fluoride-co-hexafluoropropylene) was dissolved in 2 mL of DMF; 0.60 g of LiTFSI, 1 g of the diallyl compound, 0.2033 g of pentaerythritol tetrakis(3-mercaptopropionate), and 0.078 g of fluoroethylene carbonate were added, stirred for 5 h to uniformity, then added with 0.031 g of a photoinitiator (the photoinitiator was 2,2-dimethoxy-2-phenylacetophenone) and then continuously stirred for 1 h to obtain a homogeneous precursor solution.
the precursor solution was subjected to ultrasonic treatment for 5 min, scraped onto a rectangular polytetrafluoroethylene plate using a scraper with a groove of 250 µm, dried in vacuum at 60°C for 1 h, and subjected to ultraviolet irradiation for 1 h (wavelength: 365 nm, light intensity: 150 mW cm⁻²) to obtain a film; the film was peeled off from the polytetrafluoroethylene plate for demolding to obtain an SIPN electrolyte (with a thickness of 161 µm).

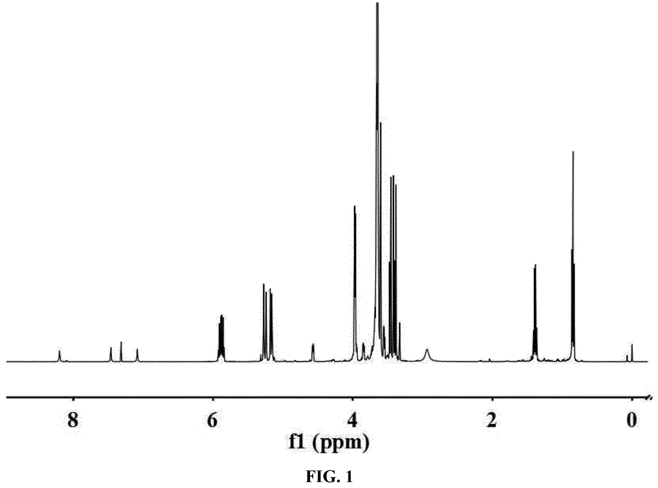

The diallyl compound was subjected to a nuclear magnetic resonance test, and the test results were shown in FIG. 1. FIG. 1 showed a proton nuclear magnetic resonance spectrogram of the diallyl compound. As shown in FIG. 1, the diallyl compound had a structure consistent with that shown in Formula 1.

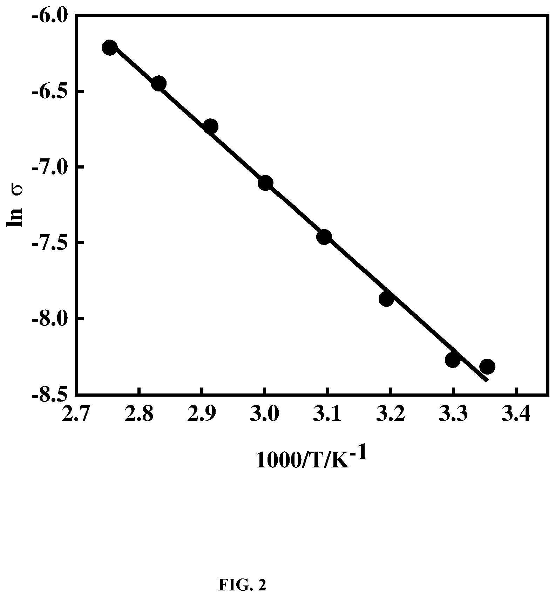

FIG. 2 showed a curve that an ion conductivity of the SIPN electrolyte changed with temperature. As shown in FIG. 2, an original ionic conductivity at 25°C was 2.45×10⁻⁴ S·cm⁻¹, and an ionic conductivity at 90°C was 2.00×10⁻³ S·cm⁻¹, indicating that the ionic conductivity increased with the increase of temperature.

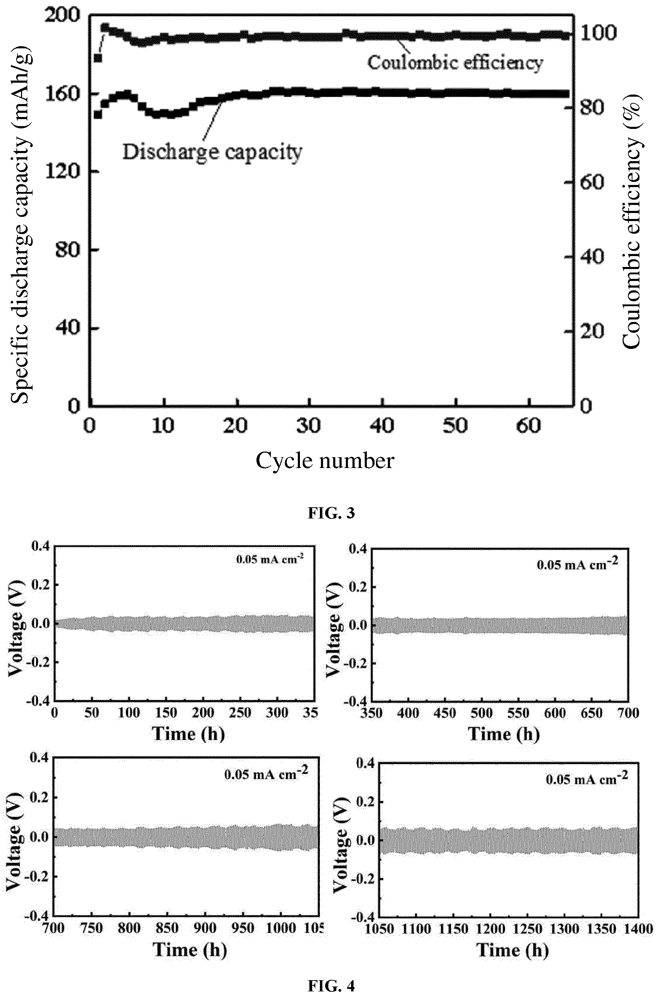

The SIPN electrolyte prepared in Example 1 was used as an electrolyte to assemble a button cell, where a cathode active material was lithium iron phosphate, a current collector was aluminum foil, a conductive agent was acetylene black, and a binder was polytetrafluoroethylene; an anode was lithium metal. FIG. 3 showed a room-temperature cycle test result of a button cell assembled by the SIPN electrolyte. As shown in FIG. 3, for the button cell assembled with the SIPN electrolyte: at a rate of 0.1 C, the SIPN electrolyte-based battery exhibited an initial discharge capacity of 149.3 mA·h·g⁻¹, which maintained at 159.9 mA·h·g⁻¹ after 65 cycles; and the battery had a Coulombic efficiency consistently above 98%.

FIG. 4 showed a cycle test result of a Li//Li symmetric button cell assembled by the SIPN electrolyte prepared in Example 1. The symmetric cell was cycled for one hour of Li⁺ electroplating and one hour of Li⁺ stripping with a 12-mm-diameter lithium foil at a current density of 0.05 mA cm⁻²; where a negative voltage and a positive voltage represented electroplated and stripped lithium ions, respectively. After 1200 h of cycling, the positive voltage was maintained at 0.05 V, indicating that an interface between the Li anode and the electrolyte film was relatively stable, while the electrolyte film and the lithium anode showed excellent interfacial compatibility.

### Example 2

0.85 g of N,N'-carbonyldiimidazole and 0.646 g of N,N'-diisopropylethylamine were dissolved in 20 mL of dichloromethane, and air in a device was removed to obtain a first solution; 5 g of polyethylene glycol monomethyl ether with a molar mass of 1,000 g/mol was dissolved in 50 mL of dichloromethane to obtain a second solution; the second solution was added to the first solution, and stirred at room temperature for 24 h to obtain terminal methylimidazole-based polyethylene oxide.

3 g of the terminal methylimidazole-based polyethylene oxide and 0.645 g of 2,2-bis(allyloxymethyl)-1-butanol were dissolved in 30 mL of chloroform, and stirred at room temperature for 24 h to obtain a diallyl compound.

0.2407 g of poly(vinylidene fluoride-co-hexafluoropropylene) was dissolved in 1.4 mL of DMF; 0.60 g of LiTFSI, 1 g of the diallyl compound, 0.2033 g of pentaerythritol tetrakis(3-mercaptopropionate), and 0.072 g of fluoroethylene carbonate were added, stirred for 5 h to uniformity, then added with 0.029 g of a photoinitiator (the photoinitiator was 2,2-dimethoxy-2-phenylacetophenone) and then continuously stirred for 1 h to obtain a homogeneous precursor solution.

The precursor solution was subjected to ultrasonic treatment for 5 min, scraped onto a rectangular polytetrafluoroethylene plate using a scraper with a groove of 250 µm, dried in vacuum at 60°C for 1 h, and subjected to ultraviolet irradiation for 1 h (wavelength: 365 nm, light intensity: 150 mW cm⁻²) to obtain a film; the film was peeled off from the polytetrafluoroethylene plate for demolding to obtain an SIPN electrolyte (with a thickness of 161 µm).

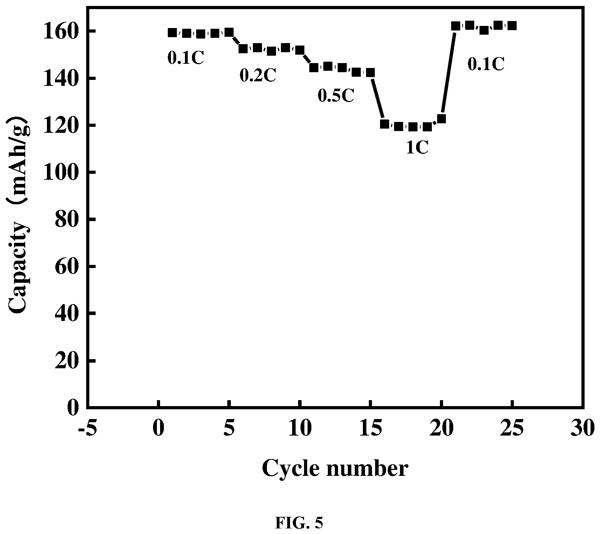

FIG. 5 showed a room-temperature rate cycle test result of a Li//Li symmetric button cell assembled by the SIPN electrolyte. As shown in FIG. 5, the lithium iron phosphate had a specific discharge capacity of 160 mAh·g⁻¹ at a rate of 0.1 C under room temperature; the specific discharge capacity at 0.2 C rate was 150 mAh g⁻¹; the specific discharge capacity at 0.5 C rate was 145 mAh g⁻¹; the specific discharge capacity at 1 C rate was 120 mAh·g⁻¹. Moreover, when the current rate was restored to the initial 0.1 C, the specific discharge capacity was almost completely restored, indicating that the button cell had excellent rate performance.

### Example 3

0.85 g of N,N'-carbonyldiimidazole and 0.646 g of N,N'-diisopropylethylamine were dissolved in 20 mL of dichloromethane, and air in a device was removed to obtain a first solution; 5 g of polyethylene glycol monomethyl ether with a molar mass of 1,000 g/mol was dissolved in 50 mL of dichloromethane to obtain a second solution; the second solution was added to the first solution, and stirred at room temperature for 24 h to obtain terminal methylimidazole-based polyethylene oxide.

3 g of the terminal methylimidazole-based polyethylene oxide and 0.645 g of 2,2-bis(allyloxymethyl)-1-butanol were dissolved in 30 mL of chloroform, and stirred at room temperature for 24 h to obtain a diallyl compound.

0.4813 g of poly(vinylidene fluoride-co-hexafluoropropylene) was dissolved in 3 mL of DMF; 0.60 g of LiTFSI, 1 g of the diallyl compound, 0.2033 g of pentaerythritol tetrakis(3-mercaptopropionate), and 0.085 g of fluoroethylene carbonate were added, stirred for 5 h to uniformity, then added with 0.034 g of a photoinitiator (the photoinitiator was 2,2-dimethoxy-2-phenylacetophenone) and then continuously stirred for 1 h to obtain a homogeneous precursor solution.

The precursor solution was subjected to ultrasonic treatment for 5 min, scraped onto a rectangular polytetrafluoroethylene plate using a scraper with a groove of 250 µm, dried in vacuum at 60°C for 1 h, and subjected to ultraviolet irradiation for 1 h (wavelength: 365 nm, light intensity: 150 mW cm⁻²) to obtain a film; the film was peeled off from the polytetrafluoroethylene plate for demolding to obtain an SIPN electrolyte (with a thickness of 161 µm).

### Example 4

1.703 g of N,N'-carbonyldiimidazole and 1.29 g of N,N'-diisopropylethylamine were dissolved in 20 mL of dichloromethane, and air in a device was removed to obtain a first solution; 5 g of polyethylene glycol monomethyl ether with a molar mass of 500 g/mol was dissolved in 50 mL of dichloromethane to obtain a second solution; the second solution was added to the first solution, and stirred at room temperature for 24 h to obtain terminal methylimidazole-based polyethylene oxide.

3 g of the terminal methylimidazole-based polyethylene oxide and 1.135 g of 2,2-bis(allyloxymethyl)-1-butanol (containing mono- and tri-substituted products) were dissolved in 30 mL of chloroform, and stirred at room temperature for 24 h to obtain a diallyl compound.

0.4026 g of poly(vinylidene fluoride-co-hexafluoropropylene) was dissolved in 2.6 mL of DMF; 0.54 g of LiTFSI, 1 g of the diallyl compound, 0.3420 g of pentaerythritol tetrakis(3-mercaptopropionate), and 0.087 g of fluoroethylene carbonate were added, stirred for 5 h to uniformity, then added with 0.035 g of a photoinitiator (the photoinitiator was 2,2-dimethoxy-2-phenylacetophenone) and then continuously stirred for 1 h to obtain a homogeneous precursor solution.

The precursor solution was subjected to ultrasonic treatment for 5 min, scraped onto a rectangular polytetrafluoroethylene plate using a scraper with a groove of 250 µm, dried in vacuum at 60°C for 1 h, and subjected to ultraviolet irradiation for 1 h (wavelength: 365 nm, light intensity: 150 mW cm⁻²) to obtain a film; the film was peeled off from the polytetrafluoroethylene plate for demolding to obtain an SIPN electrolyte (with a thickness of 161 µm).

### Example 5

1.703 g of N,N'-carbonyldiimidazole and 1.29 g of N,N'-diisopropylethylamine were dissolved in 20 mL of dichloromethane, and air in a device was removed to obtain a first solution; 5 g of polyethylene glycol monomethyl ether with a molar mass of 500 g/mol was dissolved in 50 mL of dichloromethane to obtain a second solution; the second solution was added to the first solution, and stirred at room temperature for 24 h to obtain terminal methylimidazole-based polyethylene oxide.

3 g of the terminal methylimidazole-based polyethylene oxide and 1.135 g of 2,2-bis(allyloxymethyl)-1-butanol (containing mono- and tri-substituted products) were dissolved in 30 mL of chloroform, and stirred at room temperature for 24 h to obtain a diallyl compound.

0.2684 g of poly(vinylidene fluoride-co-hexafluoropropylene) was dissolved in 1.6 mL of DMF; 0.54 g of LiTFSI, 1 g of the diallyl compound, 0.3420 g of pentaerythritol tetrakis(3-mercaptopropionate), and 0.080 g of fluoroethylene carbonate were added, stirred for 5 h to uniformity, then added with 0.032 g of a photoinitiator (the photoinitiator was 2,2-dimethoxy-2-phenylacetophenone) and then continuously stirred for 1 h to obtain a homogeneous precursor solution.

The precursor solution was subjected to ultrasonic treatment for 5 min, scraped onto a rectangular polytetrafluoroethylene plate using a scraper with a groove of 250 µm, dried in vacuum at 60°C for 1 h, and subjected to ultraviolet irradiation for 1 h (wavelength: 365 nm, light intensity: 150 mW cm⁻²) to obtain a film; the film was peeled off from the polytetrafluoroethylene plate for demolding to obtain an SIPN electrolyte (with a thickness of 161 µm).

### Example 6

1.703 g of N,N'-carbonyldiimidazole and 1.29 g of N,N'-diisopropylethylamine were dissolved in 20 mL of dichloromethane, and air in a device was removed to obtain a first solution; 5 g of polyethylene glycol monomethyl ether with a molar mass of 500 g/mol was dissolved in 50 mL of dichloromethane to obtain a second solution; the second solution was added to the first solution, and stirred at room temperature for 24 h to obtain terminal methylimidazole-based polyethylene oxide.

3 g of the terminal methylimidazole-based polyethylene oxide and 1.135 g of 2,2-bis(allyloxymethyl)-1-butanol (containing mono- and tri-substituted products) were dissolved in 30 mL of chloroform, and stirred at room temperature for 24 h to obtain a diallyl compound.

0.5372 g of poly(vinylidene fluoride-co-hexafluoropropylene) was dissolved in 3.2 mL of DMF; 0.54 g of LiTFSI, 1 g of the diallyl compound, 0.3420 g of pentaerythritol tetrakis(3-mercaptopropionate), and 0.094 g of fluoroethylene carbonate were added, stirred for 5 h to uniformity, then added with 0.038 g of a photoinitiator (the photoinitiator was 2,2-dimethoxy-2-phenylacetophenone) and then continuously stirred for 1 h to obtain a homogeneous precursor solution.

The precursor solution was subjected to ultrasonic treatment for 5 min, scraped onto a rectangular polytetrafluoroethylene plate using a scraper with a groove of 250 µm, dried in vacuum at 60°C for 1 h, and subjected to ultraviolet irradiation for 1 h (wavelength: 365 nm, light intensity: 150 mW cm⁻²) to obtain a film; the film was peeled off from the polytetrafluoroethylene plate for demolding to obtain an SIPN electrolyte (with a thickness of 161 µm).

The test results of the cycle performance and rate performance of the Li//Li symmetrical button cell assembled with the SIPN electrolyte in Examples 3 to 6 were similar to those of Examples 1 and 2.

## Claims

1. A semi-interpenetrating polymer network (SIPN) electrolyte, comprising the following raw materials: poly(vinylidene fluoride-co-hexafluoropropylene), a diallyl compound, a crosslinking agent, a plasticizer, a photoinitiator , and a lithium salt; wherein
the poly(vinylidene fluoride-co-hexafluoropropylene), the diallyl compound, the crosslinking agent, the plasticizer, and the photoinitiator are at a mass ratio of (10-40):(30-70):(1-5):(1-20):(2-10);
the lithium salt and the SIPN electrolyte are at a mass ratio of 1:(2-10);
the diallyl compound has a structure shown in Formula 1: 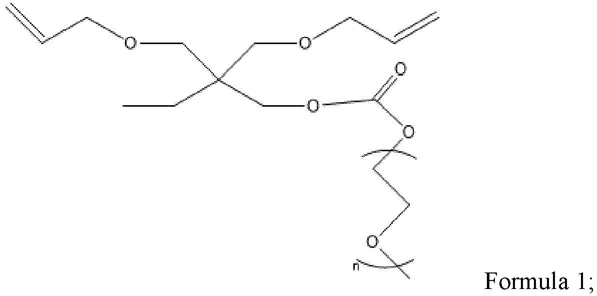 wherein
n is a positive integer;a preparation method of the diallyl compound comprises the following steps:
mixing N,N'-carbonyldiimidazole, N,N'-diisopropylethylamine, and polyethylene glycol monomethyl ether with a first organic solvent to allow first elimination to obtain a terminal methylimidazole-based polyethylene oxide; and
mixing the terminal methylimidazole-based polyethylene oxide and 2,2-bis(allyloxymethyl)-1-butanol (containing mono- and tri-substituted products) with a second organic solvent to allow second elimination to obtain the diallyl compound; wherein
the crosslinking agent is one or more selected from the group consisting of pentaerythritol tetrakis(3-mercaptopropionate), dipentaerythritol hexakis(3-mercaptopropionate), trimethylolpropane tris(3-mercaptopropionate), and pentaerythritol tetrakis(2-mercaptoacetate); and
a preparation method of the SIPN electrolyte comprises the following steps:
mixing the poly(vinylidene fluoride-co-hexafluoropropylene), the lithium salt, the diallyl compound, the crosslinking agent, the plasticizer, and the photoinitiator with an organic solvent to obtain a precursor solution; and
forming a film from the precursor solution, and subjecting the film to ultraviolet irradiation to obtain the SIPN electrolyte.

2. The SIPN electrolyte according to claim 1, wherein the N,N'-carbonyldiimidazole, the N,N'-diisopropylethylamine, and the polyethylene glycol monomethyl ether are at a mass ratio of (1-15):(1-15):20; and
the terminal methylimidazole-based polyethylene oxide and the 2,2-bis(allyloxymethyl)-1-butanol (containing mono- and tri-substituted products) are at a mass ratio of 10:(1-10).

3. The SIPN electrolyte according to claim 1 or 2, wherein
the first organic solvent and the second organic solvent are independently selected from the group consisting of dichloromethane, chloroform, methanol, ethanol, acetone, acetonitrile, dimethylsulfoxide (DMSO), N,N-dimethylformamide (DMF), and N,N-dimethylacetamide (DMA).

4. The SIPN electrolyte according to claim 3, wherein the first elimination and the second elimination each are conducted under stirring; and
the first elimination and the second elimination are conducted at a room temperature for independently 6 h to 24 h.

5. The SIPN electrolyte according to claim 1, wherein the plasticizer is one or more selected from the group consisting of propylene carbonate, ethylene carbonate, dimethyl carbonate, diethyl carbonate, fluoroethylene carbonate, and ethyl methyl carbonate.

6. The SIPN electrolyte according to claim 1, wherein the photoinitiator is one or more selected from the group consisting of benzoylbenzene, phenylbenzophenone, 4-methylbenzophenone, 1-hydroxycyclohexyl phenyl ketone, and 2,2-dimethoxy-2-phenylacetophenone; and
the lithium salt is one or more selected from the group consisting of LiPF₆, LiClO₄, LiTFSI, LiFSI, LiBOB, and LiDFOB.

7. A preparation method of the SIPN electrolyte according to any one of claims 1 to 6, comprising the following steps:
mixing the poly(vinylidene fluoride-co-hexafluoropropylene), the lithium salt, the diallyl compound, the crosslinking agent, the plasticizer, and the photoinitiator with an organic solvent to obtain a precursor solution; and
forming a film from the precursor solution, and subjecting the film to ultraviolet irradiation to obtain the SIPN electrolyte.

8. The preparation method according to claim 7, wherein the ultraviolet irradiation is conducted at a wavelength of 100 nm to 380 nm and a light intensity of (10-200) mW·cm⁻² for 0.5 h to 1.5 h.

9. Use of the SIPN electrolyte according to any one of claims 1 to 6 in a polymer lithium battery.

## Patentansprüche

1. Elektrolyt mit semi-interpenetrierendem Polymernetzwerk (SIPN), umfassend die folgenden Rohmaterialien: Poly(Vinylidenfluorid-co-hexafluorpropylen), eine Diallyl-Verbindung, ein Vernetzungsmittel, einen Weichmacher, einen Photoinitiator und ein Lithiumsalz; wobei
das Poly(Vinylidenfluorid-co-hexafluorpropylen), die Diallyl-Verbindung, das Vernetzungsmittel, der Weichmacher und der Photoinitiator in einem Massenverhältnis von (10-40):(30-70):(1-5):(1-20):(2-10) vorhanden sind;
das Lithiumsalz und der SIPN-Elektrolyt in einem Massenverhältnis von 1:(2-10) vorhanden sind;
die Diallyl--Verbindung eine Struktur nach Formel 1 aufweist: 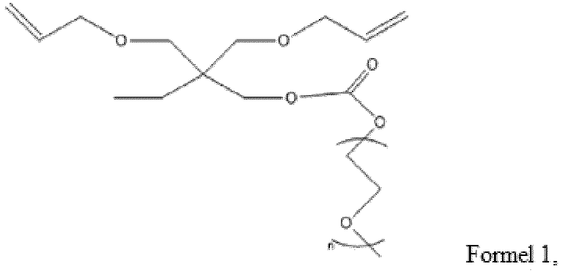 wobei
n eine positive ganze Zahl ist, wobei ein Herstellungsverfahren der Diallyl-Verbindung die folgenden Schritte umfasst:
Mischen von N,N'-Carbonyldiimidazole, N,N'-Diisopropylethylamin und Polyethylene-Glykol-Monomethyl-Ether mit einem ersten organischen Lösungsmittel, um eine erste Eliminierung zu erlauben und ein endständiges methylimidazolbasiertes Polyethylenoxid zu erhalten; und
Mischen des endständigen methylimidazolbasierten Polyethylenoxids und 2,2-Bis(allyloxymethyl)-1-butanol (enthaltend mono- und trisubstituierte Produkte) mit einem zweiten organischen Lösungsmittel, um eine zweite Eliminierung zu erlauben und die Diallyl-Verbindung zu erhalten; wobei
das Vernetzungsmittel eines oder mehrere ist, die aus der Gruppe bestehend aus Pentaerythritol-tetrakis(3-mercaptopropionat), Dipentaerythritol-hexakis(3-mercaptopropionat), Trimethylolpropane-tris(3-mercaptopropionat) und Pentaerythritoltetrakis(2-mercaptoacetate) ausgewählt wird/werden; und
ein Herstellungsverfahren des SIPN-Elektrolyten die folgenden Schritte umfasst:
Mischen Poly(vinylidenfluorid-co-hexafluorpropylen), des Lithiumsalzes, der Diallyl-Verbindung, des Vernetzungsmittels, des Weichmachers und des Photoinitiators mit einem organischen Lösungsmittel, um eine Vorläuferlösung zu erhalten; und
Herstellen eines Films aus der Vorläuferlösung und Unterziehen des Films einer UV-Bestrahlung, um den SIPN-Elektrolyten zu erhalten.

2. SIPN-Elektrolyt nach Anspruch 1, wobei N,N'-Carbonyldiimidazole, N,N'-Diisopropylethylamin und Polyethylene-Glykol-Monomethyl-Ether in einem Massenverhältnis von (1-15):(1-15):20 vorhanden sind;
das endständige methylimidazolbasierte Polyethylenoxid und das 2,2-Bis(allyloxymethyl)-1-butanol (enthaltend mono- und trisubstituierte Produkte) in einem Massenverhältnis von 10:(1-10) vorhanden sind.

3. SIPN-Elektrolyt nach Anspruch 1 oder 2, wobei
das erste organische Lösungsmittel und das zweite organische Lösungsmittel unabhängig voneinander aus der Gruppe bestehend aus Dichlormethan, Chloroform, Methanol, Ethanol, Aceton, Acetonitril, Dimethylsulfoxid (DMSO), N,N-Dimethylformamid (DMF) und N,N-Dimethylacetamid (DMA) ausgewählt werden.

4. SIPN-Elektrolyt nach Anspruch 3, wobei die erste Eliminierung und die zweite Eliminierung jeweils unter Rühren durchgeführt werden; und
die erste Eliminierung und die zweite Eliminierung jeweils bei Raumtemperatur für unabhängig 6 h bis 24 h durchgeführt werden.

5. SIPN-Elektrolyt nach Anspruch 1, wobei der Weichmacher eines oder mehrere ist, der/die aus der Gruppe bestehend aus Propylencarbonat, Ethylencarbonat, Dimethylcarbonat, Diethylcarbonat, Fluorethylencarbonat und Ethylmethylcarbonat ausgewählt wird/werden.

6. SIPN-Elektrolyt nach Anspruch 1, wobei der Photoinitiator eines oder mehrere ist, der/die aus der Gruppe bestehend aus Benzoylbenzoe, Phenylbenzophenon, 4-Methylbenzophenon, 1-Hydroxycyclohexyl-Phenylketon und 2,2-Dimethoxy-2-phenylacetophenon ausgewählt wird/werden; und
das Lithiumsalz eines oder mehrere ist, das/die aus der Gruppe bestehend aus LiPF₆, LiClO₄, LiTFSI, LiFSI, LiBOB und LiDFOB ausgewählt wird/werden.

7. Herstellungsverfahren des SIPN-Elektrolyten nach einem der Ansprüche 1 bis 6, umfassend die folgenden Schritte:
Mischen Poly(Vinylidenfluorid-co-hexafluorpropylen), des Lithiumsalzes, der Diallyl-Vverbindung, des Vernetzungsmittels, des Weichmachers und des Photoinitiators mit einem organischen Lösungsmittel, um eine Vorläuferlösung zu erhalten; und
Herstellen eines Films aus der Vorläuferlösung und Unterziehen des Films einer UV-Bestrahlung, um den SIPN-Elektrolyten zu erhalten.

8. Herstellungsverfahren nach Anspruch 7, wobei die UV-Bestrahlung bei einer Wellenlänge von 100 nm bis 380 nm und einer Lichtintensität von (10-200) mW·cm⁻² für 0,5 h bis 1,5 h durchgeführt wird.

9. Verwendung des SIPN-Elektrolyten nach einem der Ansprüche 1 bis 6 in einer Polymerlithiumbatterie.

## Revendications

1. Électrolyte à réseau polymère semi-interpénétré (SIPN), comprenant les matières premières suivantes : poly(fluorure de vinylidène-co-hexafluoropropylène), un composé diallyle, un agent de réticulation, un plastifiant, un photoinitiateur et un sel de lithium ; dans lequel
le poly(fluorure de vinylidène-co-hexafluoropropylène), le composé diallyle, l'agent de réticulation, le plastifiant et le photoinitiateur sont dans un rapport massique de (10-40):(30-70):(1-5):(1-20):(2-10) ;
le sel de lithium et l'électrolyte SIPN sont dans un rapport massique de 1:(2-10) ;
le composé diallyle a une structure telle que montrée dans la Formule 1 : 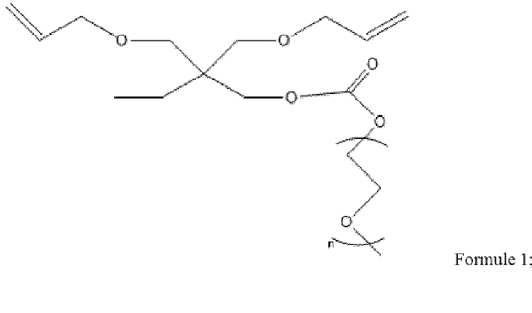 dans laquelle
n est un entier positif, un procédé de préparation du composé diallyle comprend les étapes suivantes :
mélanger le N,N'-carbonyldiimidazole, la N,N'-diisopropyléthylamine et le monoéther méthylique de polyéthylène glycol avec un premier solvant organique pour permettre une première élimination afin d'obtenir un oxyde de polyéthylène à base de méthylimidazole terminal ; et
mélanger l'oxyde de polyéthylène à base de méthylimidazole terminal et le 2,2-bis(allyloxyméthyl)-1-butanol (contenant des produits mono- et tri-substitués) avec un second solvant organique pour permettre une seconde élimination afin d'obtenir le composé diallyle ; dans lequel
l'agent de réticulation est un ou plusieurs choisis dans le groupe constitué de tétrakis(3-mercaptopropionate) de pentaérythritol, hexakis(3-mercaptopropionate) de dipentaérythritol, tris(3-mercaptopropionate) de triméthylolpropane et tétrakis(2-mercaptoacétate) de pentaérythritol ; et
un procédé de préparation de l'électrolyte SIPN comprend les étapes suivantes :
mélanger le poly(fluorure de vinylidène-co-hexafluoropropylène), le sel de lithium, le composé diallyle, l'agent de réticulation, le plastifiant et le photoinitiateur avec un solvant organique pour obtenir une solution précurseur ; et
former un film à partir de la solution précurseur, et soumettre le film à une irradiation ultraviolette pour obtenir l'électrolyte SIPN.

2. L'électrolyte SIPN selon la revendication 1, dans lequel le N,N'-carbonyldiimidazole, la N,N'-diisopropyléthylamine et le monoéther méthylique de polyéthylène glycol sont dans un rapport massique de (1-15):(1-15):20 ; et
l'oxyde de polyéthylène à base de méthylimidazole terminal et le 2,2-bis(allyloxyméthyl)-1-butanol (contenant des produits mono- et tri-substitués) sont dans un rapport massique de 10:(1-10).

3. L'électrolyte SIPN selon la revendication 1 ou 2, dans lequel
le premier solvant organique et le second solvant organique sont indépendamment choisis dans le groupe constitué de dichlorométhane, chloroforme, méthanol, éthanol, acétone, acétonitrile, diméthylsulfoxyde (DMSO), N,N-diméthylformamide (DMF) et N,N-diméthylacétamide (DMA).

4. L'électrolyte SIPN selon la revendication 3, dans lequel la première élimination et la seconde élimination sont chacune conduites sous agitation ; et
la première élimination et la seconde élimination sont conduites à température ambiante pendant indépendamment 6 h à 24 h.

5. L'électrolyte SIPN selon la revendication 1, dans lequel le plastifiant est un ou plusieurs choisis dans le groupe constitué de carbonate de propylène, carbonate d'éthylène, carbonate de diméthyle, carbonate de diéthyle, carbonate de fluoroéthylène et carbonate d'éthylméthyle.

6. L'électrolyte SIPN selon la revendication 1, dans lequel le photoinitiateur est un ou plusieurs choisis dans le groupe constitué de benzoylbenzène, phénylbenzophénone, 4-méthylbenzophénone, 1-hydroxycyclohexyl phényl cétone et 2,2-diméthoxy-2-phénylacétophénone ; et
le sel de lithium est un ou plusieurs choisis dans le groupe constitué de LiPF₆, LiClO₄, LiTFSI, LiFSI, LiBOB et LiDFOB.

7. Procédé de préparation de l'électrolyte SIPN selon l'une quelconque des revendications 1 à 6, comprenant les étapes suivantes :
mélanger le poly(fluorure de vinylidène-co-hexafluoropropylène), le sel de lithium, le composé diallyle, l'agent de réticulation, le plastifiant et le photoinitiateur avec un solvant organique pour obtenir une solution précurseur ; et
former un film à partir de la solution précurseur, et soumettre le film à une irradiation ultraviolette pour obtenir l'électrolyte SIPN.

8. Le procédé de préparation selon la revendication 7, dans lequel l'irradiation ultraviolette est conduite à une longueur d'onde de 100 nm à 380 nm et une intensité lumineuse de (10-200) mW·cm⁻² pendant 0,5 h à 1,5 h.

9. Utilisation de l'électrolyte SIPN selon l'une quelconque des revendications 1 à 6 dans une batterie lithium-polymère.
